# EUROPEAN PATENT APPLICATION

(11) **EP 4 553 317 A1**
(43) Date of publication of application: **14.05.2025**
(21) Application number: 23208319.6
(22) Date of filing: 07.11.2023
(51) Int. Cl.: F03D 80/00, F03D 80/60, F24F 13/08

(54) **LOUVER**

(71) Applicant: Siemens Gamesa Renewable Energy A/S, 7330 Brande (DK)
(72) Inventor: Bhatia, Chitransh, 560100 Bangalore (IN); Gudimani, Arun, 580025 Hubli Karnakata (IN); Radhakrishnan, Aneesh, 560100 Bangalore (IN)
(74) Representative: SGRE-Association

(57) **Abstract**

Louver, adapted to be fixated to a nacelle of a wind turbine, comprising a rectangular frame (2) having a bottom frame part (3), a top frame part (4) and two side frame parts (5, 6), and a number of louver blades (9) extending between the side frame parts (5, 6), characterized in that each louver blade (9) consists of at least two blade parts (10, 11, 12, 12a) connected via respective connection interfaces (15, 16) provided at the blade parts (10, 11, 12, 12a), wherein at least one gutter (27) for catching a fluid is provided at one of the blade parts (10, 11, 12, 12a).

## Description

The invention refers to a louver, adapted to be fixated to a nacelle of a wind turbine, comprising a rectangular frame having a bottom frame part, a top frame part and 2 side frame parts, and a number of louver blades extending between the side frame parts.

As commonly known, a wind turbine comprises a number of rotor blades attached to a hub, which is connected to a generator. When wind blows, the wind interacts with the rotor blades making the hub rotate, which rotation drives the generator. The generator produces electric power, as commonly known. When producing electric power, the generator heats up and needs to be cooled. Cooling air is guided through the generator housing, thereby cooling the generator. The cooling air heats up and is finally guided out of the generator housing. The heated air is then guided via one or more exhaust ducts to one or more louvers arranged at the nacelle, which louvers open to the outer surrounding of the nacelle, so that the heated air is blown into the surrounding. The louvers are the interface between the inner of the nacelle respectively the exhaust duct extending to the generator housing and the outer surrounding of the nacelle, which is exposed to different kinds of weather conditions. During windy or stormy conditions in combination with rain there is a likelihood of rainwater entering the louvers and the ducts and subsequently the generator housing causing severe damage to the generator.

To prevent rainwater from entering through the louver, each louver is provided with a number of louver blades extending between the two side frame parts of the rectangular louver frame. An example of such a louver is shown in US 3 645 195 A. The louver blades are one-piece elements having a very specific geometry. Their ends are bent into opposing directions for allowing the louver blades to be fixated to the frame. The bent ends are followed by plate-like blade parts, which are offset to each other and are connected almost in the middle of the length of the blade via a C-shaped connection geometry, which builds a gutter. The louver blades are stacked above each other in the louver frame such that they overlap each other, seen in the horizontal direction. When wind blows and rain is pressed into the louver, the rainwater hits on the plate part closer to the outside and is finally caught in the gutter, so that it is prevented from entering the inner of the necessary etc.

As mentioned, the louver blades of the prior art louver are one-piece blades, which are specifically designed and dimensioned for a specific frame size. This renders the prior art louver very complex and expensive.

It is an object of the invention to provide an improved louver.

For addressing the object a louver as mentioned above is characterized in that each louver blade consists of at least two blade parts connected via respective connection interfaces provided at the blade parts, wherein at least one gutter for catching a fluid is provided at one of the blade parts.

The inventive louver has a modular blade design, as each louver blade consists of at least two separate blade parts. Each blade part has a connection interfaces, so that both blade parts can be easily connected by simply engaging the connection interfaces. The louver blade comprises at least two of such blade parts, but may also comprise three or four, due to the modular character of the blade design. Therefore, the louver blade is adjustable in its length simply by using either a varying number of blade parts or of blade parts having different length in order to adapt it to different frame dimensions or different blade angles, which blade angles are the angles under which the respective blades are mounted relative to the frame. The modular blade system may for example comprise one basis standard part, which is always used for each blade no matter how long it is. To this basis standard part for example one further blade part is attached, in case one further blade parties enough. This second blade part may be provided for example in two or three different lengths, so that there is a certain variability. Certainly, also one standard intermediate part may be used, which is attached to the basis standard part, and to which a third terminal blade part is attached. It is obvious, that within such a modular system a high variety regarding the final dimensions of a louver blade is given.

So, depending on the size of the frame, and also depending on the position at the nacelle, where the louver shall be installed (more to the top, to the side or to the bottom), which position has an impact on the blade angles under which the louver blades are attached to the frame, the geometry of the louver blades is decided and the respective blade parts are chosen within the system and are connected to build the respective louver blade, whereafter all blades are attached to the frame.

For attaching the louver blades to the frame, each louver blade preferably comprises fixation interfaces for fixating the louver blade to the frame. The blade parts, which are designed as terminal blade parts, are provided with respective fixation interfaces, which are adapted for realizing a mechanical stable connection of the respective louver blade to the frame. Preferably, these connection interfaces are provided at the ends of the terminal blade parts, how many blade parts are ever used for building the respective blade.

According to an embodiment of the invention, each louver blade has a first and a second blade side, wherein the first blade side is flat and wherein the connection interfaces, the at least one gutter and the fixation interfaces extends to the second side. According to this embodiment, the blade parts respectively the finally built blade has a very specific design respectively cross-section. The first side of the blade is completely flat, no protrusions are provided at this site. The second side comprises all relevant geometries. At this side the connection interfaces, the at least one gutter and the fixation interfaces protrude. The louver blade therefore is very small or thin, and especially has one flat side respectively surface, which, when the louver is installed in the nacelle, this side is this side facing the air coming from the generator. This air therefore can easily flow along these flat, even surfaces, it is guided without any obstacles in the flow path from the inside to the outside. Due to this design in the slim geometry, the inventive louver shows only a relatively small pressure drop from the inside to the outside. This is positive regarding the layout of the one or several fans, which are used for sucking the heated cooling air from the generator housing and for blowing this air into the exhaust duct and via this exhaust duct to the louver. The layout of these fans can be smaller with less power needed to transport the air, which makes the cooling more efficient.

In order to keep the blade as slim as possible, the connection interfaces, the at least one gutter and the fixation interfaces preferably extend from the second side for a maximum of 20 mm, especially a maximum of 15 mm. These geometries therefore project only for some millimeters from the second side respectively second surface. Usually, the gutter, which collects any rainwater being pressed into the louver, is the geometry which projects the most. But a maximum extension of 20 mm is sufficient for catching also larger amounts of water. As mentioned, one gutter may be enough, especially when the frame is quite slim. In wider frames, also the louver blades are longer, so that three or four blade parts are connected and two or more gutters are provided.

Preferably the at least one gutter is provided in the area of a connection interfaces. For example, the gutter is formed at the basis standard blade part right at its end, where the connection interface is provided, so that at this end both the connection interface and the gutter are formed. If for example only one additional second blade part is connected via its connection interfaces, the gutter is provided almost in the middle of the blade length. If for example an intermediate blade part is connected to the basis standard blade part, also this intermediate blade part may have a gutter at one end, wherein this intermediate blade part certainly has two connection interfaces, one for connecting to the basis standard blade part, the other one for connecting to third blade part which may be the final blade part. In such an embodiment, two gutters are provided. It is obvious, that due to this modular system blades comprising two or even more gutters may easily be built simply by connecting the respective blade parts via their respective connection interfaces, wherein some of these blade parts are provided with respective gutters.

A gutter is preferably rounded in a C-shaped form, but may certainly also have different geometries, as long as it still performs its rainwater catching properties.

As mentioned, two blade parts are connected via their connecting interfaces. Preferably the connection interfaces build a clamping connection. By connecting two blade parts, they are mechanically firmly clamped together, so that it is a very stable connection, which can also take higher loads resulting from the pressure resting on the connection due to the air directed from the inner onto the blades or at stormy conditions from the outside onto the blades. Such a clamping connection is not only very stable, but also simple in terms of connecting the blade parts.

Such connection interfaces are preferably realized as tongue-and-groove-joints. Such joints are simple in their design, but very effective and easy in connecting them, providing very stable mechanical connections. Preferably each connection interfaces comprises a tongue and a groove, wherein the tongue of one interface engages into the groove of the other interface. So, there is a double-tongue-and-groove-joint connecting both blade parts, so that the connection is even more stable.

Preferably, each connection interface comprises a receiving groove, wherein the receiving grooves complement each other for a closed receiving space, into which a rod-like clamping element is inserted. By this clamping element, the two separate joints are further clamped in addition to their intrinsic clamping, as the clamping element exerts an additional clamping pressure on to the respective joints.

As mentioned, the terminal ends of the blade parts and therefore of the blade itself is provided with respective fixation interfaces. These fixation interfaces are preferably arranged at the ends of the terminal blade parts, so that they can be fixated to the frame with their ends, no fixation over the length of the blade is necessary.

Preferably each fixation interface comprises a clamping means adapted to build a clamping connection for fixating the louver blade to the frame. So, also this connection is a mechanical clamping connection is realized. Such a clamping means is for example a clamping groove, into which a clamping element attached to the frame is inserted. Such a clamping element may for example be a pin attached to each of the side frame parts and extending into the groove, so that two such pins engage into the groove at opposite sides. In the alternative, the clamping element may also be a clamping rod extending through the whole groove and fixated with both ends to the side frame parts.

The blade parts are preferably made of metal, especially aluminum. Metal is the preferred material, which easily withstands the loads resting on the louver blades resulting from either the air load resting on them from the inner of the turbine or from wind from the outside. But in the alternative, also reinforced polymer blade parts may be used, as they may also be sufficiently stable to withstand the pressure loads. The polymeric matrix may for example be reinforced with fibers like glass fibers or the like.

Depending on the dimensions of the opening in the nacelle respectively the position, where the louver is arranged at the nacelle (more to the top, in the middle or more to the bottom) the design of the louver blades and the arrangement and orientation of the louver blades may vary. Preferably the louver blades are arranged in the frame with an angle of 15° to 60°, especially between 20° to 40° to the plane of the frame opening. When the louver blade is arranged more to the top of the nacelle, rainwater coming from above enters into a different angle compared to an arrangement of the louver more to the side or to the bottom. Therefore, the blade angle of a louver arranged more to the top of the nacelle needs to be different compared to the blade angle of a louver arranged more to the bottom of the nacelle. The blade angle of the blades of a louver arranged more to the top is usually larger than the blade angle of a louver arranged more to the bottom. So, the blade angle of a top louver is for example about 40° to 60°, wherein the blade angle of a bottom louver is for example 15° to 30°.

In an alternative or additionally, the louver blades may have a length between 120 - 300 mm, especially 150 - 250 mm. The overall length of the blades depends on the width or thickness of the louver frame and of the blade angle. The larger the blade angle and the wider the frame, the longer are the blades, and vice versa.

Finally, in an alternative or additionally, the distance between two louver blades is between 50 - 100 mm, especially between 60 - 80 mm. Also this distance or pitch varies depending especially on the blade angle.

Finally, the invention refers to a wind turbine, comprising a generator and a nacelle, wherein one or more louvers as described above are arranged at the nacelle for guiding air provided from the generator to the surrounding of the nacelle.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: the principal prospective illustration of an inventive louver, adapted to be fixated to nacelle of a wind turbine,
- fig. 2: a sectional side view of the louver of fig. 1,
- fig. 3: a principal illustration of a louver blade of a first configuration,
- fig. 4: a principal illustration of a louver plate of a second configuration,
- fig. 5: a principal illustration of a first blade part,
- fig. 6: a principal illustration of a second blade part,
- fig. 7: a principal illustration of a third blade part,
- fig. 8: a principal illustration of a fourth blade part,
- fig. 9: a partial illustration of a wind turbine,
- fig. 10: an enlarged illustration of the section X of fig. 9,
- fig. 11: a principal illustration of the connection of a louver to a fan providing hot air to be exhausted via the louver, and

fig. 12 a principal illustration of a wind turbine.

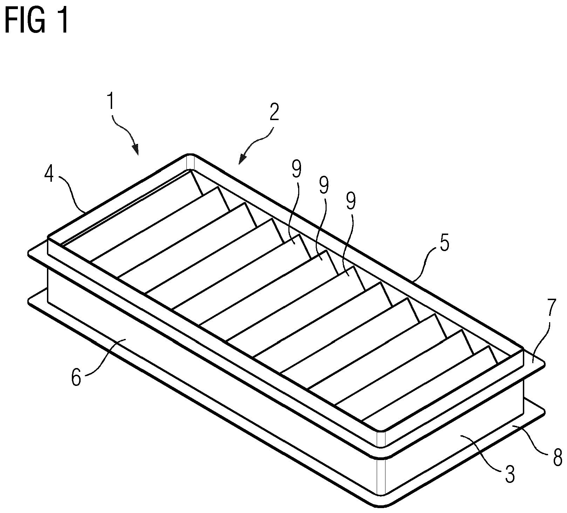

Fig. 1 shows an inventive louver 1, which is adapted to be fixated to a nacelle of a wind turbine. The louver 1 comprises a rectangular frame to having a bottom frame part 3, a top frame part for and to side frame parts 5, 6. The frame to his preferably made of metal, preferably aluminum. It has a rectangular shape, the frame parts 3, 4, 5 and 6 are somehow plate-like and have respective flanges 7, 8 for fixating them to respective fixation means of the nacelle. In the inner of the louver frame 2 a number of louver blades 9 is arranged, which are fixated to the side frame parts 5, 6 and are attached in a slanted arrangement.

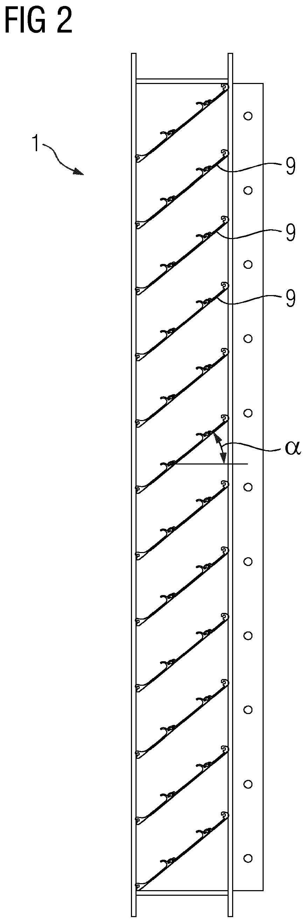

This arrangement is shown in fig. 2, which shows a cross-section of the louver 1. It shows the number of louver blades 9, which are arranged under an angle α, measured to the horizontal plane as shown in fig. 2. As shown, the louver blades 9 overlap each other, when looking onto the louver 1 in the horizontal direction. The louver blades 9 are arranged such that hot air from the generator can be exhausted when being actively blown onto the blade arrangement from the right side in fig. 2. When wind blows at the outside of the nacelle, in fig. 2 from the left side, the wind may enter through the louver 1, but rain carried with the wind cannot enter the inner of the nacelle due to the blade arrangement and especially the specific set up of the louver blades 9. Depending on the position, where the louver 1 is installed at the nacelle, the angle α may significantly vary. When the louver 1 is arranged at the side of the nacelle, the angle α may be for example between 25° to 35°. When the louver 1 is arranged at a position more to the top of the nacelle, the angle α is for example between 35° to 50°. And when the louver 1 is arranged at a position more to the bottom of the nacelle, the angle α is for example between 15° to 25°. The mentioned intervals are only examples and not restrictive. Depending on the angle α, also the distance respectively the pitch between the louver blades 9 may vary. When the louver 1 is arranged more to the bottom, the pitch may be larger, for example between 80 to 100 mm. When the louver 1 is arranged more to the middle, the pitch may be between 60 to 80 mm, and when the louver one is arranged more to the top, the pitch may be between 50 to 60 mm. Finally, also the length of the louver blades 9 may vary depending on the width of the louver frame 2. The length may for example vary between 120 to 300 mm.

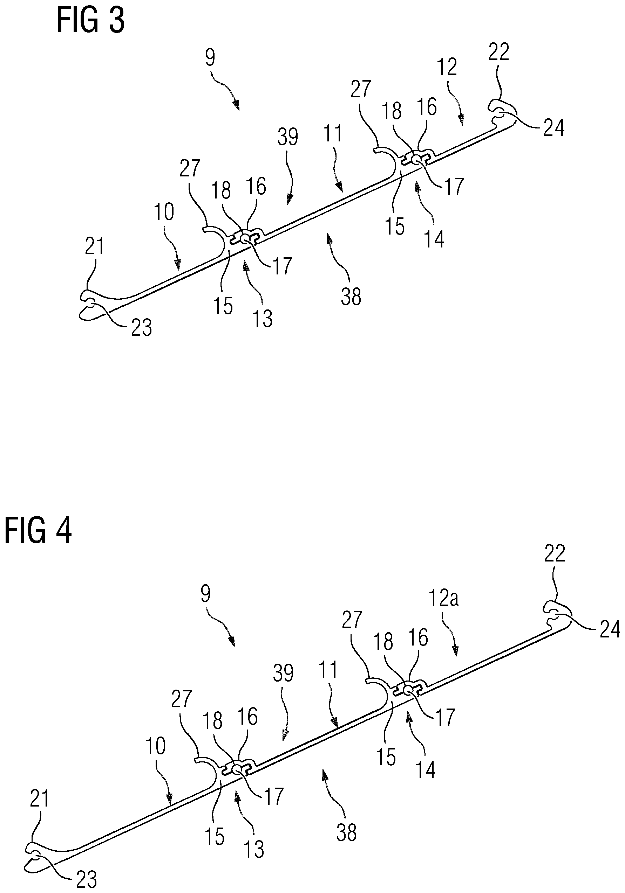

The louver blades 9 are modular and comprise two or more blade parts. Fig. 3 shows an example of such a modular louver blade 9. The louver blade 9 comprises three blade parts 10, 11 and 12, which are attached to each other by respective connections 13, 14, which are realized as clamping connections. While fig. 3 shows a first example of such a modular louver blade 9, figure for shows a second example of a louver blade 9. Also this louver blade 9 consists of three blade parts. It comprises a first blade part 10 corresponding to the blade part 10 of fig. 3 and a second blade part 11 also corresponding to the blade part 11 of fig. 3. It further comprises a blade part 12a, which is, in its design, nearly identical to the blade part 12 of fig. 3, but is longer. It is obvious that it is possible by using the first and second blade parts 10, 11 and either the third blade part 12 or 12a, louver blades 9 of different length can be built. Further, as the blade part 11 is a intermediate blade part, to which at its ends the first blade part 10 and the third blade part 12 or 12a is connected, the modular system also allows to build a louver blade 9 comprising for example four blade parts, with two intermediate second blade parts 11 being attached to each other and being arranged between a first blade part 10 and a third blade part 12 or 12a. All of these variations are possible, as the system is modular and, in the shown example, comprises only for different blade parts 10, 11, 12, 12a.

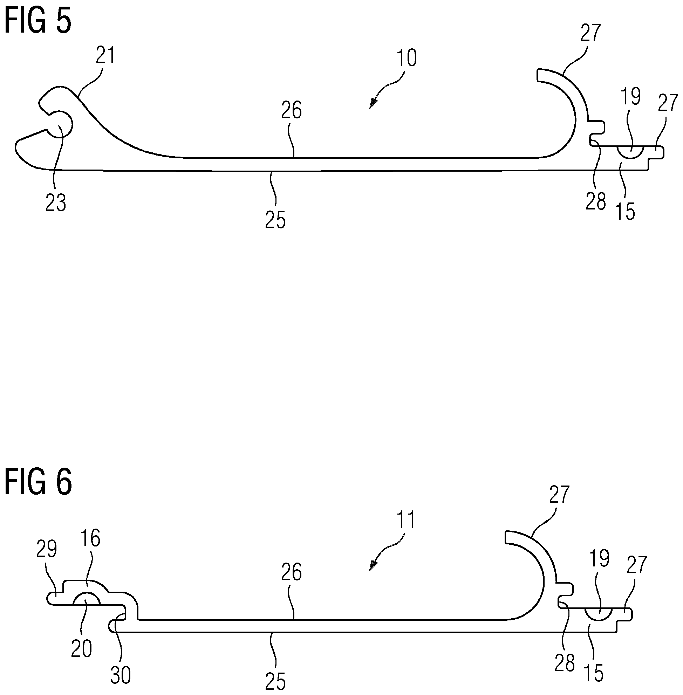

As mentioned, the blade parts are fixated to each other by respective connections 13, 14. To realize these connections 13, 14, each connection 13, 14 is realized by respective connection interfaces provided at the respective blade parts. The first blade part 10 has a first connection interface 15, which is connected to a second connection interface 16 provided at the intermediate second blade part 11 (or of the blade part 12, 12a in case of short blades 9). At the other end the second blade part 11 also comprises a first connection interfaces 15, which is connected to the second connection interface 16 of the third blade part 12 respectively the third blade part 12a. The connections 13, 14 are fixated by respective clamping elements 17, for example clamping rods, which extend over the whole length of their respective blade 9 respectively the connection 13, 14. It is inserted into a closed receiving space 18, which is realized by both connection interfaces 15, 16, which comprise respective grooves 19, 20, which grooves 19, 20 complement each other to build the closed receiving space 18. These grooves 19, 20 are also shown in the enlarged figs. 5, 6, 7 and 8 showing the respective blade parts.

As figs. 3 and 4 also show, both terminal blade parts 10 and 12 respectively 12a comprise respective fixation interfaces 21, 22 adapted to be connected to the louver frame to respectively the side frame parts 5, 6 by respective fixation means. Also the fixation interfaces 21, 22 are adapted to build respective clamping connections. To realize this, each connection interface 21, 22 comprises a clamping means in form of a clamping groove 23, 24 adapted to receive a clamping element attached to the louver frame 2. Such a clamping element may for example be a clamping pin arranged at the respective side frame parts 5, 6, or, again, a rod extending through the whole receiving the grooves 23, 24 and fixated to the side frame parts 5, 6.

The figs. 5 to 8 show enlarged illustrations of the respective blade parts 10, 11, 12 and 12a. All blade parts 10, 11, 12 and 12 a are preferably made of metal, especially aluminum, but may also be made of a sufficiently rigid polymer, preferably reinforced, showing the requested mechanical properties.

Fig. 5 shows the first blade part 10. The blade part is plate-like and has a flat first side 25, which, see fig. 5, is free of any projection. All protecting parts are protecting from the opposite second side 26. To this second side the fixation interface 21 projects, comprising the clamping groove 23. At the other end of the blade part 10, the connection interface 15 protects to the second side 26, comprising the groove 19. Further, directly attached to the connection interface 15, a gutter 27 protects from the second side 26, which gutter 27 is C-shaped and opens to the fixation interface 21. This gutter 27 is adapted to catch fluid which may enter from the outside of the nacelle into the louver 1 under windy conditions. The fluid, i.e. rainwater, is therefore caught by the gutter 27 and cannot reach the inner of the nacelle. The blade part 10, like all other blade parts 11, 12, 12a, one is a one-piece element.

Fig. 6 shows an enlarged view of the intermediate second blade part 11. Also this blade part 11 is plate-like. It also comprises a first side 25, which is completely flat, and a second side 26, to which all protecting items protect. At the left end the connection interface 16 with the groove 20 protects, wherein at the other right end the connection interface 15 with the groove 19 projects, as shown in fig. 6. Again, also this blade part 11 comprises a gutter 27, which is directly arranged at the connection interface 19 and is also C-shaped. So, as shown in figs. 3 and 4, when using such an intermediate second blade part 11 the finally built louver blade 9 comprises two gutters 27.

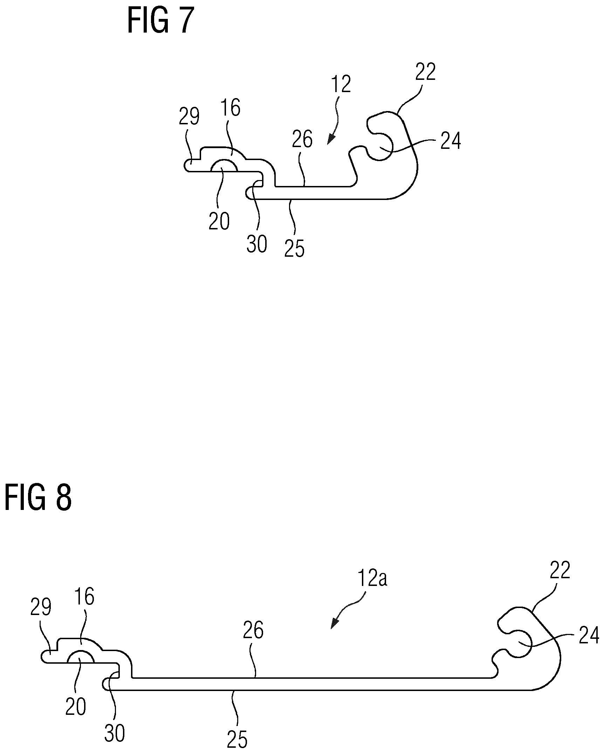

Fig. 7 shows the third blade part 12, which, as mentioned, is shorter than the blade part 12a shown in fig. 8. Except for the length, the design of both blade parts 12, 12 a is identical. They are both plate-like, with a flat first side 25 and an uneven second side 26, to which the respective connection interface 16 comprising the groove 20 and the fixation interface 22 with the groove 24 protect.

The connection interfaces 15, 16 are adapted to realize respective tongue-and-groove-joints. The connection interface 15 comprises a tongue 27 and a groove 28. The connection interface 16 also comprises a tongue 29 and a groove 30. When the connection interfaces 15, 16 are connected, the tongue 29 engages the groove 28, and the tongue 27 engages the groove 30. In the final position, the grooves 19, 20 overlap and build the receiving space 18, see figs. 3 and 4.

The differently designed blade parts 10, 11, 12 and 12a allow for building modular louver blades 9 of varying length. The shortest louver blade 9 only comprises the blade parts 10 and 12 or 12a, no intermediate blade part 11 is sandwiched between them. It is obvious, that already this short blade 9 may verify in its length due to the different lengths of the blade parts 12, 12a. The next length is built by using a blade part 10, one intermediate blade part 11 and the short blade part 12, wherein a slightly longer blade 9 may be built simply by using the blade part 12a instead of blade part 12. Finally, even longer blades may be built by using two or more intermediate second blade parts 11. So, the inventive modular blade system allows for a simple adaption of the blade length depending on the angle α and the width of the louver frame 2.

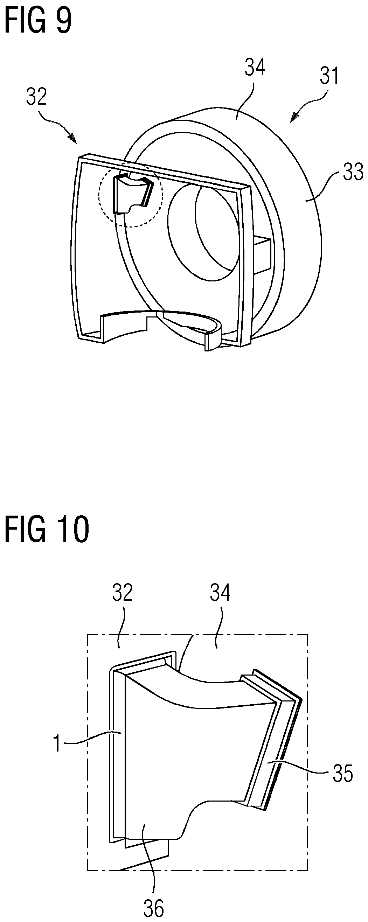

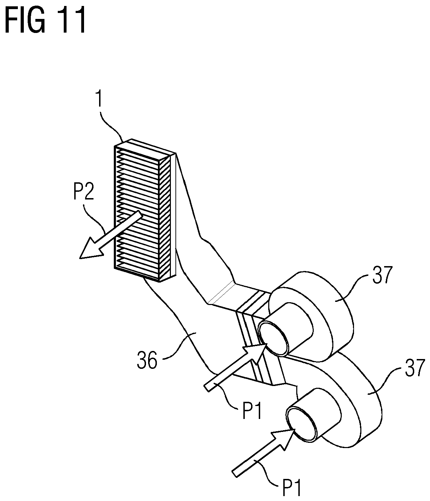

Fig. 9 shows a partial view of a wind turbine 31, from which only a part of the nacelle 32 and a part of the generator 33 respectively the generator housing 34 is shown. As mentioned, when the generator 33 produces electric power, it also heats up, which heat needs to be removed. Therefore, cooling air is blown through the generator 33 respectively through the generator housing 34 in order to remove the heat, wherein the heated cooling air needs to be finally exhausted out of the nacelle. The nacelle 32, as shown in fig. 10, comprises a number of louvers 1 arranged at different locations at the nacelle 32, some more to the top, some more in the middle and some more to the bottom of the nacelle. The generator housing 34 in this embodiment comprises respective connection interfaces 35, to each of which an exhaust duct 37 is connected, which is also connected with its other end to a louver 1, as shown in fig. 10. While fig. 10 shows an exhaust duct 36 bent for approximately 90°, fig. 11 shows a slightly different setup. It shows to fans 37, which are connected to an exhaust duct 36 having a different design as the one shown in fig. 10. Nevertheless, also here the exhaust duct 36 is connected to the louver 1. As shown by the arrows P1, hot cooling air is sucked from the generator housing 34 by the fans 37 and is blown into the exhaust duct 36. It enters the louver 1 and is exhausted as shown by the arrow P2.

As mentioned, all blade parts 10, 11, 12 and 12a have a completely flat first side 25. When the modular louver blade 9 is built, also the louver blade 9 has a completely flat first side 38 with a flat, even surface, as shown in figs. 3 and 4. The hot cooling air is blown against this flat surface or side 38 and can flow along this flat side 38 until it finally leaves the louver 1. No obstacle is in the flow path of the exhausted air, so that an almost perfect flow is possible. Further, as all items protect only on the second side 26 of each blade part 10, 11, 12, 12a, each louver blade 9 comprises a second side 39, at which the respective items like the connection interfaces 15, 16, the fixation interfaces 21, 22 and the gutters 27 project. This allows for a very slim design of the whole blade 9, as shown in fig. 3 and 4. The items, which extends the most from the second side 39, are the gutters 27. They for example extend for 20 mm from the surface, may be less, may be more, depending on the overall design. The numbers are only for exemplifying purpose. Due to the slim arrangement and the completely flat side 38 the pressure drop from the inside of the louver 1 to the outside of the louver 1 is quite small. This allows for a large airflow respectively a high flow volume through the louver 1, and for a perfect airflow along the flat sides 38 of the blades 9. This makes it possible, that the fans 37 do not need to be that powerful compared to arrangements comprising louvers of the prior art.

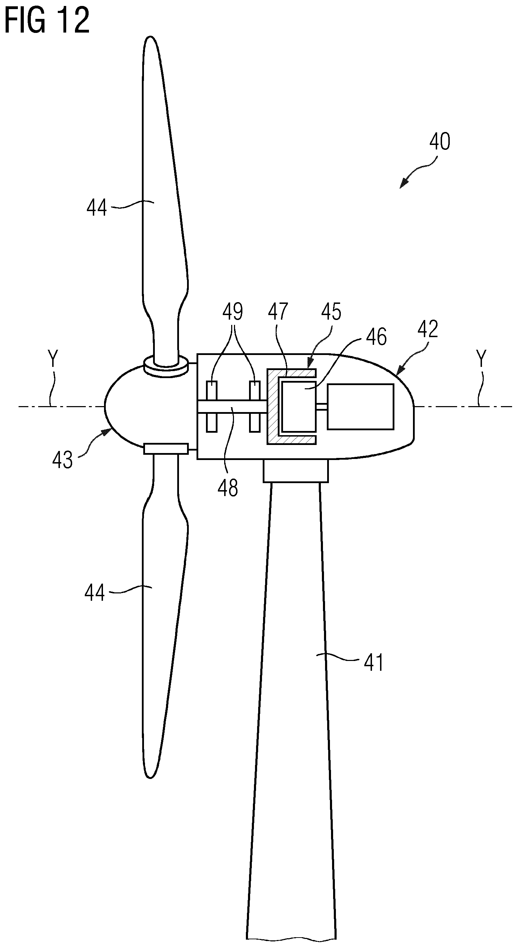

Fig. 12 shows a wind turbine 40 according to the invention. The wind turbine 40 comprises a tower 41, which is mounted on a non-depicted foundation. A nacelle 42 is arranged on top of the tower 41. The wind turbine 40 further comprises a wind rotor 43 having at least one blade 44 (in the embodiment of Figure 12, the wind rotor 43 comprises three blades 44, of which only two blades 44 are visible). The wind rotor 43 is rotatable around a rotational axis Y. The blades 44 extend substantially radially with respect to the rotational axis Y. In general, when not differently specified, the terms axial, radial and circumferential in the following are made with reference to the rotational axis Y.

The wind turbine 40 comprises an electric generator 45, including a stator 46 and a rotor 47. The rotor 47 is rotatable
with respect to the stator 20 about the rotational axis Y. The wind rotor 43 is rotationally coupled with the electric generator 45 either directly, e.g. direct drive or by means of a rotatable main shaft 48 and/or through a gear box (not shown in Figure 12). A schematically depicted bearing assembly 49 is provided in order to hold in place the main shaft 48 and the rotor 43. The rotatable main shaft 48 extends along the rotational axis Y.

The wind turbine 40 respectively its nacelle 42 is equipped with one or more louvers as depicted above.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Louver, adapted to be fixated to a nacelle of a wind turbine, comprising a rectangular frame (2) having a bottom frame part (3), a top frame part (4) and two side frame parts (5, 6), and a number of louver blades (9) extending between the side frame parts (5, 6), **characterized in that** each louver blade (9) consists of at least two blade parts (10, 11, 12, 12a) connected via respective connection interfaces (15, 16) provided at the blade parts (10, 11, 12, 12a), wherein at least one gutter (27) for catching a fluid is provided at one of the blade parts (10, 11, 12, 12a).

2. Louver according to claim 1, **characterized in that** each louver blade (9) comprises fixation interfaces (21, 22) for fixating the louver blade (9) to the frame (2).

3. Louver according to claim 2, **characterized in that** each louver blade (9) has a first and a second blade side (38, 39), wherein the first blade side (38) is flat and wherein the connection interfaces (15, 16), the gutter (27) and the fixation interfaces (21, 22) extend to the second side (39).

4. Louver according to claim 3, **characterized in that** the connection interfaces (15, 16), the gutter (27) and the fixation interfaces (21, 22) extend from the second side (39) for a maximum of 20 mm, especially a maximum of 15 mm.

5. Louver according to one of the preceding claims, **characterized in that** the gutter (27) is provided in the area of a connection interface (15, 16).

6. Louver according to one of the preceding claims, **characterized in that** the connecting interfaces (15, 16) build a clamping connection (13, 14).

7. Louver according to claim 6, **characterized in that** the connection interfaces (15, 16) are tongue-and-groove-joints.

8. Louver according to claim 5, **characterized in that** each connection interface (15, 16) comprises a tongue 27, 29) and a groove (28, 30), wherein the tongue (27, 29) of one connection interface (15, 16) engages into the groove (28, 30) of the other connection interface (15, 16).

9. Louver according to claim 8, **characterized in that** each connection interface (15, 16) comprises a receiving groove (19, 20), wherein the receiving grooves (19, 20) complement each other for a closed receiving space (18), into which a rod-like clamping element (17) is inserted.

10. Louver according to one of the preceding claims, **characterized in that** the fixation interfaces (21, 22) are arranged at the ends of the terminal blade parts (10, 12, 12a) .

11. Louver according to claim 10, **characterized in that** each fixation interface (21, 22) comprises a clamping means adapted to build a clamping connection for fixating the louver blade (9) to the frame (2).

12. Louver according to claim 11, **characterized in that** the clamping means is a clamping groove (23, 24), into which a clamping element attached to the frame (2= is inserted.

13. Louver according to one of the preceding claims, **characterized in that** the blade parts (10, 11, 12, 12a) are made of metal, especially aluminum.

14. Louver according to one of the preceding claims, **characterized in that** the louver blades (9) are arranged in the frame (2) with an angle (α) of 15° - 60°, especially between 20° - 40° to the plane of the frame opening and/or that the louver blades (9) have a length between 120 - 300 mm, especially 150 - 250 mm, and/or the distance between two louver blades (9) is between 50 - 100 mm, especially between 60 - 80 mm.

15. Wind turbine, comprising a generator and a nacelle, wherein one or more louvers (1) according to one of the preceding claims are arranged at the nacelle (32) for guiding air provided from the generator (33) to the surrounding of the nacelle (32).
